# EUROPEAN PATENT APPLICATION

(11) **EP 2 650 111 A1**
(43) Date of publication of application: **16.10.2013**
(21) Application number: 12164046.0
(22) Date of filing: 13.04.2012
(51) Int. Cl.: B29C 70/54, B29C 70/32, B29C 53/56, B29B 11/16

(54) **Process for making a curved product**

(71) Applicant: Teijin Aramid B.V., 6824 BM Arnhem (NL)
(72) Inventor: Harings, Jules Armand Wilhelmina, 6511 MG Nijmegen (NL); Janse, Gerardus Hubertus Anna, 6051 BW Maasbracht (NL); Rijnen, Wille Brodas Cornelus Jacobus Maria, 5052 WL Goirle (NL)
(74) Representative: Oberlein, Gerriet H. R.

(57) **Abstract**

A process for making a curved product, a process for making a consolidated curved product, a process for making an antiballistic curved product and products obtainable by said processes. The processes comprise:
a) winding one or more reinforcing elements around a mandrel to provide a wound object, wherein a matrix material is applied to part of the surface area of the one or more reinforcing elements prior to winding; and wherein the matrix material is substantially homogeneously distributed along the surface of the wound object and, optionally, along the thickness of the wound object,
b) fixing at least some of the reinforcing elements to each other by the matrix material to provide a plurality of fixing points in the wound object, and c) removing the wound object from the mandrel to provide at least one curved product.

## Description

The instant invention relates to a process for making a curved product, to a process for making a consolidated curved product, to a process for making an antiballistic curved product and to products obtainable by said processes.

High-performance articles, such as ballistic-resistant articles, are typically manufactured by moulding stacks of sheets, plies or layers made of high strength materials into a desired shape. The sheets, plies or layers generally comprise high-strength fibers, such as aramid or polyethylene, embedded in a polymer matrix material.

The production of curved objects by such stack-moulding methods becomes difficult because of the intrinsically high stiffness of the stack. This is particularly so for stacks of sheets comprising a low matrix content, which can be desirable for obtaining articles with a high ballistic performance. In such cases thermoforming by stack-moulding processes becomes nearly impossible and wrinkles are encompassed in the products. Wrinkles are unfavourable for ballistic performance because they decrease the local penetration resistance. Further, wrinkles also increase trauma upon impact, because they may partially "unfold" during impact.

To prevent the formation of wrinkles in curved articles such as helmets, winding methods have been described as a suitable alternative to stack-moulding methods.

WO 2008/128715 describes a process for manufacturing a curved product which comprises positioning a plurality of drawn polymeric reinforcing elements onto a mandrel, locally adhering at least a part of the elements to each other, and removing the product from the mandrel. The curved product may then be placed in a mould and compressed at an elevated temperature and pressure to provide a curved armour article. The curved armour article is described to have good antiballistic properties and to be substantially free of wrinkles.

WO 2008/128708 discloses an armour product produced by a filament winding process in which a plurality of reinforcing elements in the form of fibers and/or tapes are impregnated with a polymer matrix material and wound onto a mandrel. The polymer matrix material comprises a solution and/or dispersion of a polymer in a carrier fluid, which carrier fluid is at least partly evaporated during and/or after winding.

EP 2 151 312 discloses a method for manufacturing a semi-finished product comprising the steps of positioning a plurality of elongated reinforcing elements, onto a mandrel, allocating in the thus produced product a first part and, distinct therefrom, a second part, fixating the reinforcing elements in the first part, and removing the semi-finished product from the mandrel.

One challenge of the winding methods described above is to obtain a curved object which is stable enough to be subsequently transported and/or processed, by for instance, moulding without compromising the antiballistic properties of the final curved article. Besides the formation of wrinkles other aspects that may influence the performance of curved articles, such as the amount of matrix material or the homogeneity of the final product, should also preferably be controlled.

There is a need for an improved winding process which is simple and provides a curved product which may be used to manufacture curved articles with good antiballistic properties.

The instant invention relates to a process for making a curved product comprising:
a) winding one or more reinforcing elements around a mandrel to provide a wound object,
   wherein a matrix material is applied to part of the surface area of the one or more reinforcing elements prior to winding; and
   wherein the matrix material is substantially homogeneously distributed along the surface of the wound object and, optionally, along the thickness of the wound object,
b) fixing at least some of the reinforcing elements to each other by the matrix material to provide a plurality of fixing points in the wound object, and
c) removing the wound object from the mandrel to provide at least one curved product.

The instant invention provides an improved method for manufacturing a curved product, which may be a double curved product, by winding, wherein the application of the matrix material does not interfere with the winding process allowing a full control over the distribution and the composition of the matrix material in the final product. Further, by having the matrix material homogeneously distributed over the curved product a low amount of matrix material may be used whilst ensuring that the curved product obtained is stable and is easy to handle. In particular, by having an homogeneous distribution of the matrix material final curved products a homogeneous performance all over the final antiballistic article is achieved.

The instant process comprises applying a matrix material to part of the surface area of one or more reinforcing elements prior to winding.

The term "matrix material" refers to a material which is suitable for fixing the reinforcing elements together. Any material which may be used to attain this purpose is suitable as matrix material. Preferably, a matrix material is chosen which also contributes to the performance and stability of the final curved product or products obtained therefrom.

The matrix material may wholly or partially consist of a polymer material. The use of non-polymeric organic matrix material is also envisaged. Said matrix material may optionally contain additives suitable and/or common for use, for instance, in combination with a polymer as a matrix material, in particular functional additives which may facilitate fixation or consolidation via, for instance, focused infra-red, laser, ultrasonic, microwave, induction and conductive energy (by means of an stamp). Examples of suitable additives include for instance dyes, colorants and absorbers which may be used to facilitate laser welding.

The polymer preferably is a thermoplastic polymer. Preferably a soft plastic is used, in particular it is preferred for the matrix material to have a tensile modulus (at 25°C) of between 200 and 1400 MPa, in particular between 400 and 1200 MPa, more in particular between 600 and 1000 MPa.

Thermoplastic polymers that are suitable for the reinforcing elements are listed in for instance EP 833742 and WO-A-91/12136. In particular, the thermoplastic polymers may be selected from at least one of polyurethanes, polyvinyls, polyacrylates, polyolefins and block copolymers such as SIS (styrene-isoprene-styrene), SBS (styrene-butadiene-styrene), SEBS (styrene-ethylene-butylene-polystyrene). Polyolefins and block copolymers are preferably chosen as matrix material.

Preferably, the elongation to break of the matrix material is greater than the elongation to break of the reinforcing elements. In particular, the elongation to break of the matrix material in the final ballistic-resistant article preferably is from 100 to 1200% the elongation to break of the reinforcing elements.

The term "reinforcing element" as described herein refers to an object the largest dimension of which, the length, is larger than the second smallest dimension, the width, and the smallest dimension, the thickness. Accordingly, the reinforcing element used in the present invention encompasses a fiber (including monofilaments, multifilament yarns and threads), a tape (including monolithic tapes and tapes constructed from fibers) and other elongate objects having a regular or irregular cross-section. It is preferred that the reinforcing element is continuous. In the process described herein, where the reinforcing element is wound around a mandrel, it is preferred that the length of the reinforcing element is sufficient for the manufacture of at least one wound object. For instance, the reinforcing elements may be 1200 to 40000 m long, preferably 1600-20000 m long, more preferably 2000-10000 m long, most preferably 2600-5000 m long.

The reinforcing elements may generally comprise any type of high-strength material. It is preferred that the reinforcing elements are suitable for ballistic applications. Suitable high-strength materials include, for example, polymeric materials (such as polyolefin, aramid and polyester), carbon, and glass. The use of reinforcing elements comprising more than one high-strength material is also envisaged. The reinforcing elements preferably comprise at least one material selected from polyethylene, aramid and carbon. The type and materials of reinforcing elements suitable for the process as described herein is elucidated in more detail below. It may be mentioned that the reinforcing elements preferably comprise a tape, in particular, a polyethylene tape.

The term "surface area" of the reinforcing elements as described herein refers to the outer part of the reinforcing element.

The part of the surface area to which the matrix material is applied covers between 1-90 % of the surface area of the reinforcing element, in particular between 5 and 75 %, more in particular between 10 and 50 %, more in particular between 15 and 40 %.

The part of the surface area to which the matrix material is applied may be chosen depending on the type and dimensions of the reinforcing element. Tapes are preferred reinforcing elements given the versatility and control that they provide in the application of the matrix material.

In one embodiment, the matrix material is preferably applied to one side of the reinforcing element, leaving the other side of the reinforcing element free or substantially free of matrix material, i.e. in such a way that the matrix material covers at most 2.5 % of the area of the other side, in particular at most 1 %, more in particular at most 0.5 % and yet more in particular at most 0.1 %. However, the matrix material may also be applied to both sides of the reinforcing element.

In one particular embodiment the matrix material is applied to part of the area of one side of the reinforcing element, i.e. in such a way that the part of the surface area to which the matrix material is applied covers between 5-95 % of the surface area of said side of the reinforcing element, in particular between 10 and 90 %, more in particular between 20 and 85 %, more in particular between 30 and 80 %.

In another particular embodiment the matrix material is applied to all or substantially all the area of one side of the reinforcing element, i.e. in such a way that the part of the surface area to which the matrix material is applied covers at least 95 % of the area of that side, in particular at least 97.5 % and more in particular between 99 % and more in particular at least 99.5 %.

The part of the surface area of the reinforcing element to which the matrix material is applied may be substantially regularly distributed along the reinforcing element.

Alternatively, the matrix distribution may change along the length of the reinforcing element, defining regions of the reinforcing element with a higher density of matrix present on the surface area and regions with a lower density of matrix present on the surface area.

One of the advantages of applying the matrix material to part of the surface area of the reinforcing element and prior to winding is that the composition, amount and distribution of the matrix material in the final product may be easily controlled. Since the requirements of stability of the curved product may vary the instant method can be easily adapted to satisfy such requirements, e.g. depending on the winding pattern used, on the type of reinforcing element used or on how far and how the curved product may be transported for further processing. Other requirements such as performance of the final curved article may also be accounted for.

The composition of the matrix material that is applied to the reinforcing element may be the same throughout the reinforcing element or may be varied, for instance, along the length of the reinforcing element. Variation of the composition of the matrix is useful to, for instance, having a matrix material with certain properties in winding of reinforcing elements towards the outer part of the curved product and other properties in windings of reinforcing elements towards the inner part of the curved product.

As long as the matrix material is applied to part of the surface area of the reinforcing element as defined above, the matrix material may be applied in any form or way.

Any suitable and/or commonly known methods may be used. For instance, the matrix material may be applied manually or by using computer controlled tools.

The method of application may depend on the type and form of the matrix material and/or type reinforcing element used. May be applied in solution or dispersion form, molten form or solid form.

Solutions and dispersions of matrix material are preferably applied by roll coating, but spraying may also be used. If a solution or a dispersion of the matrix material is used, the evaporation of the solvent or dispersant may occur prior, during or after winding. For instance, the matrix material may be applied *in vacuo* or under heat to facilitate the evaporation.

Molten matrix material may be applied for instance, using hot-melt application systems such as a so-called hot-melt pistol. If a molten matrix material is used, solidifying the molten matrix material may occur prior, during or after winding..

Solid matrix material, such as monofilaments, strips, tapes, yarns, films or networks of a matrix material, are generally positioned on the reinforcing element and preferably also pressed against the reinforcing element, e.g. by passing the solid matrix material together with the reinforcing element through a heated pressure roll or press.

The matrix material may also be applied to the reinforcing elements during the manufacture of the reinforcing elements, provided that in the reinforcing elements thereby obtained the matrix material is present on part of the surface area only. Any suitable and/or commonly used methods for providing reinforcing elements with embedded matrix material may be used.

The matrix material may be applied continuously or discontinuously along the length of the reinforcing element.

The matrix material may be applied defining one or more continuous or intermittent lines or stripes. Such lines or stripes may be applied around the reinforcing element, e.g. in the form of a swirl, or on one side of the reinforcing element, e.g. in the form of one or more straight or curvy lines or stripes. The lines or stripes of matrix material may be applied in molten state or as a solid (e.g. monofilaments, strips, tapes and yarns of a matrix material)

The matrix material may also be applied as dots. The dots may be applied to the reinforcing element randomly or orderly (e.g. defining an intermittent line). In this embodiment, the matrix material is preferably applied in melted form.

The matrix material may also be applied defining a regular or irregular pattern on the reinforcing elements. The pattern may be directly formed on the reinforcing element by applying the matrix material in the form of, for instance, dots or one or more lines or stripes, preferably in molten state. The pattern may also be applied as a solid pre-formed pattern of matrix material. For instance, a non-continuous film of matrix material such as a web or network of matrix material, may be used.

The matrix material may be applied as a continuous layer covering part of the surface area of the reinforcing element, e.g. covering one side of the reinforcing element leaving the other side free of matrix material. The continuous layer may be applied by placing a solid continuous film on part of the surface area of the reinforcing material or by coating part of the surface area of the reinforcing element with the matrix material. For instance, a solution of matrix material, a suspension of matrix material or a matrix material in molten state may be, for instance, laminated, rolled or sprayed onto part of the surface area of the reinforcing element.

The matrix material may also be applied to specific sections of the reinforcing element. For instance, the part of the surface area to which the matrix material is applied may define alternate sections, along the reinforcing element, with and without matrix material. In these sections the matrix material may cover part, all or substantially all the surface area of the section of the reinforcing element, leaving the immediate section at each side free or substantially free of matrix material, e.g. by forming a ring of matrix material around the reinforcing element.

Generally, the amount of matrix material is applied in an amount of at least 0.2 wt.%, based on the total weight of the matrix material-containing reinforcing element. It may be preferred for the matrix material to be present in an amount of at least 1 wt.%, more in particular in an amount of at least 2 wt.%, in some in-stances at least 2.5 wt.%. Matrix material is generally applied in an amount of at most 30 wt.%. The use of more than 30 wt.% of matrix material generally does not improve the properties of the curved product or article obtained therefrom.

It is preferred that the amount of matrix material is low. In particular a matrix material content of at most 10 wt.% may be mentioned, more in particular of at most 8 wt.%.

The matrix material-containing reinforcing elements are used for winding around a mandrel to provide a wound object. Such reinforcing elements may be directly used for winding in a continuous process. In this embodiment the changing properties of the matrix material over time (e.g. due to cooling of a molten matrix material or due to evaporation of a solvent of a solution or dispersion of the matrix material) may be advantageously used. However, providing reinforcing elements with matrix material prior to winding also allows performing the steps of applying the matrix material and of winding the reinforcing elements separately, e.g. the matrix material-containing reinforcing elements may be obtained in one site and then transported to a different site for winding. In this embodiment the matrix material-containing reinforcing elements may be provided with a protective film to facilitate their transport.

Winding may be performed by using techniques known to the skilled person. Reference is made to WO 2008/128715 the relevant parts of which are incorporated herein by reference.

The process preferably comprises unwinding bobbins of reinforcing elements under tension.

A single reinforcing element may be wound around the mandrel. However, it is preferred that several reinforcing elements are wound around the mandrel simultaneously.

In a particular embodiment the curved product is manufactured by simultaneously positioning a plurality of reinforcing elements onto the mandrel using supply means during the filament winding process. Suitable supply means may comprise a creel provided with bobbins, and optionally guiding means, for instance in the form of dispensing tubes or gutters, to guide the reinforcement elements over the surface of the mandrel. A plurality of reinforcing elements is generally comprised of less than 60 reinforcing elements, and more preferably less than 20, more preferably less than 10.

During the filament winding process the supply means may move relative to the mandrel. It is preferred that the reinforcing elements are wound around a rotating mandrel.

The tension of the reinforcing element may be controlled, e.g. by changing the distance between the supply means and the mandrel or by increasing friction of the bobbins during unwinding of the fiber. Control of the tension in the reinforcing elements is favorable for the mechanical properties of the product or article, and in particular for its stiffness and strength.

In principle, any winding pattern for the reinforcing elements (e.g. an about "geodetic" pattern and a non-geodetic pattern) may be used. A winding trajectory is geodetic when it spans the shortest distance between two points on the curved surface of the product. The reinforcing elements preferably wound in such a way that local accumulations are sufficiently "diluted" or spread over the curved product, i.e. wherein the reinforcing elements are substantially homogeneously distributed over the wound object. Modern software, known per se, allows filament winding specialists to design winding patterns with sufficient "dilution" of local fiber accumulations. Also, trial and error methods may be employed to obtain adequate winding patterns.

In the process as described herein, any mandrel may be used that is suitably shaped to provide at least one curved product from the wound object. In particular, the mandrel may have double curved surfaces, e.g., polar surfaces (which may be used, e.g., to provide a double curved product) and preferably is an ellipsoid shaped mandrel.

Winding is generally performed until the desired thickness is reached. The process according to the invention allows producing curved products having a wide variety of wall thicknesses without substantial wrinkling, which is beneficial for antiballistic performance. The winding process is preferably carried out in such a way that the thickness is substantially constant over the wound object. From a standpoint of antiballistic performance, the wall thickness of the article according to the invention is preferably between 4 and 16 mm, more preferably between 6 and 14 mm, and most preferably between 8 and 12 mm.

The matrix material is substantially homogeneously distributed over the wound object. In particular, the matrix material is substantially homogeneously distributed along the surface of the wound object and optionally may also be substantially homogeneously distributed along the thickness of the wound object. The term "along the surface" as used herein is not limited to the outer part of the curved object. The homogeneous distribution along the surface is to be understood as the matrix distribution not varying substantially over the curved object as seen in top view whereas it may vary when seen in cross-section. As long as the overall distribution is substantially homogeneous, locally, areas with high density of matrix material and areas of low density of matrix material may exist.

Since the matrix material is homogeneously distributed over the wound object, the matrix material will also be homogeneously distributed over any subsequently obtained curved product or consolidated curved product.

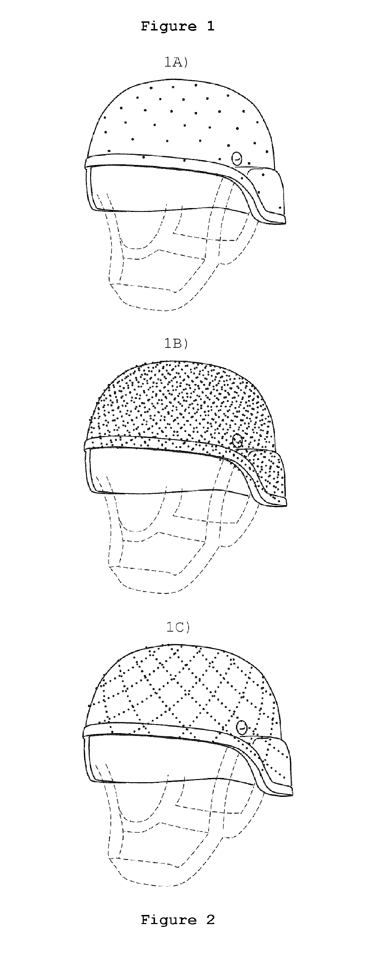

Without being limited thereto or thereby, Figure 1 shows an schematic representation of curved products obtainable according to the method of the invention (A, B and C), i.e. wherein the matrix material is substantially homogeneously distributed along the surface. The dots or dotted lines represent matrix material. It is noted that even though the curved products of figure 1 represent helmets the homogeneous distribution depicted may also apply to other curved products obtainable by the method described herein, to the wound objects.

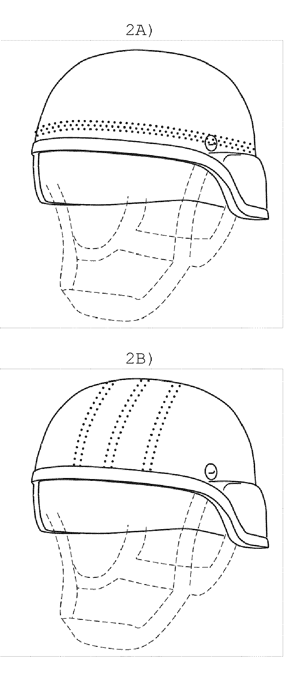

Figure 2 shows curved products (A and B) wherein the matrix material is not homogeneously distributed along the surface, and thus are not products obtainable by the method of the invention.

The distribution of the matrix material in the wound object generally results from the combination of the winding pattern used and the distribution of the matrix on the reinforcing elements prior to winding. Computer assisted programs can be used to obtain suitable combinations. For instance a matrix material which is homogeneously distributed throughout the reinforcing elements prior to winding in combination with a homogeneous distribution of the reinforcing elements during winding results in a substantially homogeneous distribution of the matrix material throughout the wound object, both along the surface and along the thickness of the wound object.

The process as described herein comprises fixing at least some of the reinforcing elements to each other by the matrix material to provide a plurality of fixing points in the wound object. The shape and size of the fixing points may vary. The distribution of the fixing points is generally such that it preserves the distribution of the wound reinforcing elements. In other words, the relative position of the reinforcing elements in the wound object after removal of the curved product from the mandrel, i.e. after step d) of the method as described herein, is substantially maintained through the fixing points. In one embodiment, the fixing points are substantially homogeneously distributed over the wound object. Generally, the fixing points may be distributed over any direction of the wound object, and in particular may be substantially homogeneously distributed along the surface and optionally along the thickness of the wound object.

Fixing is generally performed by contact during winding. Fixing of the reinforcing elements occurs between a part of one reinforcing element containing matrix material and another part of the same or another reinforcing element which part may or may not contain matrix material. The matrix-containing contact area between the two parts of the reinforcing elements, wherein the reinforcing elements are fixed together, defines a fixing point. However, some of the contact areas present in the wound object may not result in a fixing point, because despite the two parts of the reinforcing elements being contact through the matrix material they may not be fixed together. This may be the case for instance in sections wherein a type of matrix material is used which does not provide fixation by contact. Such areas may coexist in the wound object with sections wherein fixing by contact occurs. This may be achieved by using reinforcing elements wherein the composition of the matrix material applied prior winding varies along the length of the reinforcing element.

Fixing may be alternatively or additionally performed after winding by applying heat and/or pressure to the wound object. This may be the case, for instance, when a thermoplastic matrix material is used which needs to be molten/softened for fixation to take place. Heat and/or pressure may also be applied, for instance, to increase the number of fixing points in a wound object wherein fixing points are already obtained by contact, as described above. Heat and/or pressure may be applied by suitable and/or commonly used methods. For instance, by placing the mandrel on a mould, or by use of hot air (heat gun), , focused infra-red, laser, ultrasonic, microwave, induction and conductive energy (by means of an stamp).

In particular, wherein fixing is performed by applying pressure and/or heat to the wound object the fixing points are distributed over the areas wherein the pressure and/or heat is applied. In this embodiment the fixing points are distributed at least over the inner and/or outer surface of the wound object.

Wherein both fixing by contact and fixing by heat and/or pressure are performed, the fixing points may be distributed throughout the thickness of the curved product but the density of fixing points is generally higher where pressure and/or heat has been applied.

The process as described herein comprises removing the wound object from the mandrel to provide at least one curved product.

The wound object may be readily removed from the mandrel or, if necessary, removal of the wound object may comprise dividing the wound object in at least two parts. Dividing is generally performed by cutting at least part of the wound reinforcing elements. In particular, when using an ellipsoid shaped mandrel the wound object may be divided in half providing two substantially identical curved products. This embodiment advantageously does not generate waste materials.

The fixing points distributed over the wound object ensure that the curved object holds its shape after removal from the mandrel, even if removal comprises cutting wound reinforcing elements. Such stable curved product may be easily handled for further processing, even when the amount of matrix material used is low.

The instant invention further relates to a process for making a consolidated curved product.

The consolidated curved product is generally obtained by moulding the curved product obtained in the process as described herein under heat and/or pressure. Consolidation by heat may also be performed using hot-gas (heat gun), focused infra-red, laser, ultrasonic, microwave, induction and conductive energy (stamp). The consolidation of the curved product differs from fixing by pressure and/or heat in that the pressure and/or temperatures used in the consolidation step are generally higher than those used for fixing and in that consolidation generally is performed through out the curved object.

Consolidation may also be performed by applying heat and/or pressure prior to removing the wound object from the mandrel. For instance, after winding the mandrel may be placed on a mould for moulding the wound object under heat and/or pressure. In this embodiment removal of the wound object from the mandrel directly provides the consolidated curved product. It is understood than when consolidation is performed before removal of the wound object from the mandrel, fixing may occur simultaneously during consolidation but may, additionally, occur by contact during winding.

Moulding is generally performed under a pressure of at least 0.2 MPa. A maximum pressure of at most 30 MPa may be mentioned. The pressure to be applied is intended to ensure the formation of a consolidated curved product with adequate properties for use as an antiballistic article or in the manufacture of an antiballistic article.

Where necessary, the temperature during compression is selected such that the matrix material is brought above its softening or melting point, if this is necessary to cause the matrix material to help further adhere the reinforcing elements to each other and facilitate shaping of the curved product. Compression at an elevated temperature is intended to mean that the moulded article is subjected to the given pressure for a particular compression time at a compression temperature above the softening or melting point of the matrix material and below the softening or melting point of the reinforcing elements.

The required compression time and compression temperature depend on the nature of the reinforcing elements and matrix material and on the thickness of the curved product and can be readily determined by the person skilled in the art.

Where the compression is carried out at elevated temperature, it may be preferred for the cooling of the compressed material to also take place under pressure. Cooling under pressure is intended to mean that the given minimum pressure is maintained during cooling at least until so low a temperature is reached that the structure of the moulded article can no longer relax under atmospheric pressure. It is within the scope of the skilled person to determine this temperature on a case by case basis. Where applicable it is preferred for cooling at the given minimum pressure to be down to a temperature at which the organic matrix material has largely or completely hardened or crystallized and below the relaxation temperature of the reinforcing elements. The pressure during the cooling does not need to be equal to the pressure at the high temperature. During cooling, the pressure should be monitored so that appropriate pressure values are maintained, to compensate for decrease in pressure caused by shrinking of the curved product and the press.

For the manufacture of consolidated curved product in which the reinforcing elements comprise high-drawn tapes of high-molecular weight linear polyethylene, the compression temperature is preferably 115 to 135°C and cooling to below 60 °C is effected at a constant pressure. Within the present specification the temperature of the material, e.g., compression temperature refers to the temperature at half the thickness of the curved product.

The curved products and consolidated curved products obtainable by the processes as described herein are particularly suited for use in antiballistic applications.

The consolidated curved product may be directly used as antiballistic curved articles or may be further processed, by any suitable and/or commonly used methods, to provide a finished antiballistic curved article. Examples of antiballistic curved articles include helmets, radomes and ballistic protection curved panels. In particular, for the production of helmets, a helmet pre-shape is preferably obtained by a process, as described herein, wherein the mandrel used is an ellipsoid shaped mandrel. In this embodiment the wound product is preferably divided in half providing two curved products which may then be consolidated under heat and/or pressure. The helmet pre-shape being such curved product, which may or may not be consolidated. The helmet pre-shape is then generally further processed into a helmet with desired characteristics, e.g. by providing the helmet with a desired shape and suitable accessories such as helmet liners.

Having the matrix material substantially homogeneously distributed over the curved product during manufacture, provides curved products which are homogeneous and which may comprise a low amount of matrix material. Antiballistic articles provided from such curved products have excellent antiballistic properties.

Without being bound to any theory, this may be attributed to the fact that such antiballistic articles do not comprise differentiated areas, e.g. areas of high performance and areas of low performance, and to the fact that the amount of materials with lower contribution to antiballistic properties (e.g. matrix material) are reduced.

### The reinforcing elements

The term "tape" as used herein refers to an object of which the length, i.e., the largest dimension of the object, is larger than the width, the second smallest dimension of the object, and the thickness, i.e., the smallest dimension of the object, while the width is in turn larger than the thickness. More in particular, the ratio between the length and the width generally is at least 2. Depending on tape width the ratio may be larger, e.g., at least 4, or at least 6. The maximum ratio is not critical to the present invention and will depend on processing parameters.

The width of the tape generally is at least 1 mm, in particular 2 mm, more in particular at least 5 mm, still more in particular at least 10 mm, more in particular at least 15 mm, even more in particular at least 20 mm. The width of the tape is generally at most 150 mm, in particular at most 100 mm, more in particular at most 50 mm and more in particular at most 30 mm.

The thickness of the tape is generally at least 8 microns, in particular at least 10 microns. The thickness of the tape is generally at most 150 microns, more in particular at most 100 microns.

In one embodiment, tapes are used with a high linear density. In the present specification the linear density is expressed in dtex. This is the weight in grams of 10.000 metres of film. In one embodiment, tapes are used with a linear density of at least 1000 dtex, in particular at least 2500 dtex, more in particular at least 5000 dtex, even more in particular at least 7500 dtex, or even at least 10000 dtex.

The use of a tape as reinforcing element has been found to be particularly advantageous because of the high number possibilities on how the matrix material may be applied to the tape.

The term "fibre" as used herein refers to an object of which the length is larger than the width and the thickness, while the width and the thickness are within the same size range. More in particular, the ratio between the width and the thickness generally is in the range of 10:1 to 1:1, still more in particular between 5:1 and 1:1, still more in particular between 3:1 and 1:1. As the skilled person will understand, the fibres may have a more or less circular cross-section. In this case, the width is the largest dimension of the cross-section, while the thickness is the shortest dimension of the cross section. The fibers may be, for instance, monofilament yarns or multifilament yarns.For fibres, the width and the thickness are generally at least 1 micron, more in particular at least 7 micron. In the case of multifilament yarns the width and the thickness may be quite large, e.g., up to 2 mm. For monofilament yarns a width and thickness of up to 150 micron may be more conventional. As a particular example, fibres with a width and thickness in the range of 7-50 microns may be mentioned.

The reinforcing elements as described herein preferably comprise polymeric materials and in particular comprise polyethylene, aramid and/or carbon.

The reinforcing elements, i.e. tapes or fibres, generally have a high tensile strength, a high tensile modulus and a high energy absorption, reflected in a high energy-to-break.

It is preferred that the reinforcing elements have a tensile strength of at least 1.0 GPa, a tensile modulus of at least 40 GPa, and a tensile energy-to-break of at least 15 J/g.

In one embodiment, the tensile strength of the reinforcing elements is at least 1.2 GPa, more in particular at least 1.5 GPa, still more in particular at least 1.8 GPa, even more in particular at least 2.0 GPa. In a particularly preferred embodiment, the tensile strength is at least 2.5 GPa, more in particular at least 3.0 GPa, still more in particular at least 4 GPa.

In another embodiment, the reinforcing elements have a tensile modulus of at least 50 GPa. The modulus is determined in accordance with ASTM D882-00. More in particular, the reinforcing elements may have a tensile modulus of at least 80 GPa, more in particular at least 100 GPa. In a preferred embodiment, the reinforcing elements have a tensile modulus of at least 120 GPa, even more in particular at least 140 GPa, or at least 150 GPa. The modulus is determined in accordance with ASTM D882-00.

In another embodiment, the reinforcing elements have a tensile energy to break of at least 20 J/g, in particular at least 25 J/g. In a preferred embodiment the reinforcing elements have a tensile energy to break of at least 30 J/g, in particular at least 35 J/g, more in particular at least 40 J/g, still more in particular at least 50 J/g. The tensile energy to break is determined in accordance with ASTM D882-00 using a strain rate of 50%/min. It is calculated by integrating the energy per unit mass under the stress-strain curve.

In a preferred embodiment the reinforcing elements are polyethylene tapes. For preferred width and thickness specification and the tensile modulus, a tensile strength and tensile energy-to-break of the polyethylene tapes, reference is made to what is stated above for reinforcing elements and tapes in general.

In one embodiment the reinforcing elements are aramid fibers and/or tapes.

The fibers may be monofilament yarn or multifilament yarn. Suitable aramid fibers consist of aramid filaments having a tenacity of at least 2.6 GPa, more preferably of at least 3.1 GPa and most preferably of at least 3.6 GPa, and a modulus of at least 60 GPa, more preferably of at least 75 GPa and most preferably of at least 90 GPa. Dependent on the amount of filaments and the type of twist applied the properties of the thus obtained twisted fibers or yarns vary. Under normal circumstances the twisted yarns have a tenacity of at least 2.1 GPa, more preferably of at least 2.6 GPa, even more preferably of at least 3.1 and most preferably of at least 3.6 GPa, and a modulus of at least 60 GPa, more preferably of at least 80 GPa and most preferably of at least 100 GPa.

Aramid tapes may be obtained by any suitable and/or commonly used methods. For instance, aramid tapes may be obtained by parallel aligning of aramid fibers and causing them to adhere upon application of the matrix material. Optionally, they can be caused to adhere by the alternative or additional provision of weft yarns to keep the fibers together. Such tape manufacturing process is described in EP193478, US2004/081815, and WO2009/068541.

### Polyethylene, chemical composition and manufacture

The reinforcing elements preferably are of high-molecular weight linear polyethylene. Linear polyethylene here means polyethylene having fewer than 1 side chain per 100 C atoms, preferably fewer than 1 side chain per 300 C atoms. The polyethylene may also contain up to 5 mol % of one or more other alkenes which are copolymerisable therewith, such as propylene, butene, pentene, 4-methylpentene, and octene. High molecular here means a weight average molecular weight of at least 400 000 g/mol. It may be particularly preferred for the polyethylene to have a weight average molecular weight of at least 500 000 g/mol. The use of tapes, in particular fibres or tapes, with a weight average molecular weight of at least 1 * 10⁶ g/mol may be particularly preferred. The maximum molecular weight of the polyethylene suitable for use in the present invention is not critical. As a general value a maximum value of 1 * 10⁸ g/mol may be mentioned.

In one embodiment of the present invention, polyethylene reinforcing elements are used with a relatively narrow molecular weight distribution. This is expressed by the Mw (weight average molecular weight) over Mn (number average molecular weight) ratio of at most 6. More in particular the Mw/Mn ratio is at most 5, still more in particular at most 4, even more in particular at most 3. The use of materials with an Mw/Mn ratio of at most 2.5, or even at most 2 is envisaged in particular.

The molecular weight distribution and molecular weigh averages (Mw, Mn, Mz) are determined in accordance with ASTM D 6474-99 at a temperature of 160 °C using 1, 2, 4-trichlorobenzene (TCB) as solvent. Appropriate chromatographic equipment (PL-GPC220 from Polymer Laboratories) including a high temperature sample preparation device (PL- SP260) may be used. The system is calibrated using sixteen polystyrene standards (Mw/Mn <1.1) in the molecular weight range 5 x 10³ to 8 x 10⁶ g/mole.

In one embodiment polyethylene tapes, or more in particular highly-drawn polyethylene tapes, may be used. In a preferred embodiment polyethylene tapes are used which combine a high molecular weight and a high molecular orientation as is evidenced by their XRD diffraction pattern.

In one embodiment of the present invention, the polyethylene reinforcing elements are tapes having a 200/110 uniplanar orientation parameter Φ of at least 3. The 200/110 uniplanar orientation parameter Φ is defined as the ratio between the 200 and the 110 peak areas in the X-ray diffraction (XRD) pattern of the tape sample as determined in reflection geometry. Wide angle X-ray scattering (WAXS) is a technique that provides information on the crystalline structure of matter. The technique specifically refers to the analysis of Bragg peaks scattered at wide angles. Bragg peaks result from long-range structural order. A WAXS measurement produces a diffraction pattern, i.e. intensity as function of the diffraction angle 2θ (this is the angle between the diffracted beam and the primary beam). The 200/110 uniplanar orientation parameter gives information about the extent of orientation of the 200 and 110 crystal planes with respect to the tape surface. For a tape sample with a high 200/110 uniplanar orientation the 200 crystal planes are highly oriented parallel to the tape surface. It has been found that a high uniplanar orientation is generally accompanied by a high tensile strength and high tensile energy to break. The ratio between the 200 and 110 peak areas for a specimen with randomly oriented crystallites is around 0.4. However, in the tapes that are preferentially used in one embodiment of the present invention the crystallites with indices 200 are preferentially oriented parallel to the film surface, resulting in a higher value of the 200/110 peak area ratio and therefore in a higher value of the uniplanar orientation parameter. The ultra-high-molecular-weight polyethylene (UHMWPE) tapes used in one embodiment of the ballistic material according to the invention have a 200/110 uniplanar orientation parameter of at least 3. It may be preferred for this value to be at least 4, more in particular at least 5, or at least 7. Higher values, such as values of at least 10 or even at least 15 may be particularly preferred. The theoretical maximum value for this parameter is infinite if the peak area 110 equals zero. High values for the 200/110 uniplanar orientation parameter are often accompanied by high values for the strength and the energy to break. For a determination method of this parameter reference is made to WO2009/109632.

In one embodiment of the present invention, the UHMWPE tapes, in particular UHMWPE tapes with an Mw/MN ratio of at most 6 have a DSC crystallinity of at least 74%, more in particular at least 80%. The DSC crystallinity can be determined as follows using differential scanning calorimetry (DSC), for example on a Perkin Elmer DSC7. Thus, a sample of known weight (2 mg) is heated from 30 to 180°C at 10°C per minute, held at 180°C for 5 minutes, then cooled at 10°C per minute. The results of the DSC scan may be plotted as a graph of heat flow (mW or mJ/s; y-axis) against temperature (x-axis). The crystallinity is measured using the data from the heating portion of the scan. An enthalpy of fusion ΔH (in J/g) for the crystalline melt transition is calculated by determining the area under the graph from the temperature determined just below the start of the main melt transition (endotherm) to the temperature just above the point where fusion is observed to be completed. The calculated ΔH is then compared to the theoretical enthalpy of fusion (ΔH_{c} of 293 J/g) determined for 100% crystalline PE at a melt temperature of approximately 140°C. A DSC crystallinity index is expressed as the percentage 100(ΔH/ΔH_{c}). In one embodiment, the tapes used in the present invention have a DSC crystallinity of at least 85%, more in particular at least 90%.

In general, the polyethylene reinforcing elements, have a polymer solvent content of less than 0.05 wt.%, in particular less than 0.025 wt.%, more in particular less than 0.01 wt.%.

In one embodiment the polyethylene tapes used in the present invention may have a high strength in combination with a high linear density. In the present application the linear density is expressed in dtex. This is the weight in grams of 10.000 metres of film. In one embodiment, the film according to the invention has a linear density of at least 3000 dtex, in particular at least 5000 dtex, more in particular at least 10000 dtex, even more in particular at least 15000 dtex, or even at least 20000 dtex, in combination with strengths of, as specified above, at least 2.0 GPa, in particular at least 2.5 GPa, more in particular at least 3.0 GPa, still more in particular at least 3.5 GPa, and even more in particular at least 4.

### Aramid, chemical composition

Within the context of the present specification the word aramid refers to linear macromolecules made up of aromatic groups, wherein at least 60 % of the aromatic groups are joined by amide, imide, imidazole, oxalzole or thiazole linkages and at least 85% of the amide, imide, imidazole, oxazole or thiazole linkages are joined directly to two aromatic rings with the number of imide, imidazole, oxazole or thiazole linkages not exceeding the number of amide linkages.

In a preferred embodiment, at least 80% of the aromatic groups are joined by amide linkages, more preferably a least 90%, still more preferably at least 95%.

In one embodiment, of the amide linkages, at least 40% are present at the para-position of the aromatic ring, preferably at least 60%, more preferably at least 80%, still more preferably at least 90%. Preferably, the aramid is a paraaramid, that is, an aramid wherein essentially all amide linkages are adhered to the para-position of the aromatic ring.

In one embodiment of the present invention the aramid is an aromatic polyamide consisting essentially of 100 mole% of: A. at least 5 mole% but less than 35 mole%, based on the entire units of the polyamide, of units of formula (1) 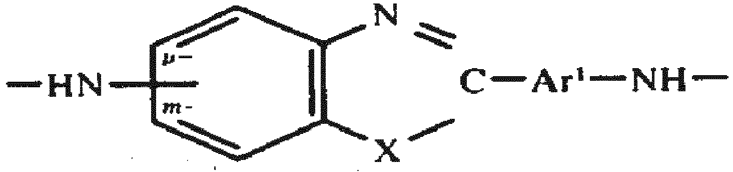 wherein Ar¹ is a divalent aromatic ring whose chain-extending bonds are coaxial or parallel and is a phenylene, biphenylene, naphthylene or pyridylene, each of which may have a substituent which is a lower alkyl, lower alkoxy, halogen, nitro, or cyano group, X is a member selected from the group consisting of O, S and NH, and the NH group bonded to the benzene ring of the above benzoxazle, benzothiazole or benzimidazole ring is meta or para to the carbon atom to which X is bonded of said benzene ring; B. 0 to 45 mole%, based on the entire units of the polyamide, of units of formula (2)

- NH - Ar² - NH -

wherein Ar² is the same in definition as Ar¹, and is identical to or different from Ar¹, or is a compound of formula (3) 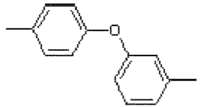 C. an equimolar amount, based on the total moles of the units of formulae (1) and (2) above, of a structural unit of formula (4)

- CO - Ar³ - CO -

wherein Ar³ is 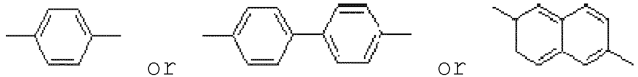 in which the ring structure optionally contains a substituent selected from the group consisting of halogen, lower alkyl, lower alkoxy, nitro and cyano; and D. 0 to 90 mole%, based on the entire units of the polyamide, of a structural unit of formula (5) below

- NH - Ar⁴ - CO -

wherein Ar⁴ is the same in definition as Ar¹, and is identical to or different from Ar¹.

The preferred aramid is poly(p-phenylene terephthalamide) which is known as PPTA. PPTA is the homopolymer resulting from mole-for-mole polymerization of p-phenylenediamine and terephthaloyl chloride. Another preferred aramid are co-polymers resulting from incorporation of other diamines or diacid chlorides replacing p-phenylenediamine and terephthaloyl chloride respectively.

### Carbon, chemical composition

The term "carbon" as used herein refers to a material based on carbon fiber (also known as graphite fiber) which is a material consisting of extremely thin fibers about 0.005-0.010 mm in diameter and composed mostly of carbon atoms. Carbon fibers combine lightweight and high strength with excellent chemical resistance. The performance of carbon fibers and, in particular, their mechanical properties, are due to the atomic configuration of the carbon in a 2 dimensional network, resembling the crystal structure of graphite. By controlling the alignment of the carbon sheets with the fiber direction the strength of the carbon fibers can be modulated. With sufficient overlap of the graphite sheets, the stress on the fiber, for instance, upon tensile load is shared between the sheets and transferred to the molecular level. Since the energy required to increase covalent bond angles and bond lengths is extremely high, the resulting carbon fiber has an extremely high modulus and strength.

Carbon fibers are generally obtained from two precursors, namely polyacrylonitrile (PAN) and pitch, each precursor resulting in carbon fibers with different properties. Generally, the properties of PAN-based fibers, can be tuned to obtain optimal results. On the other hand, pitch-based fibers have inferior properties than PAN-based fibers due to structural defects. For instance, the modulus of carbon fibers may be controlled by a thermal treatment during manufacturing. During this process, also known as carbonization, both the carbon content and the orientation of the carbon sheets along the fiber direction can be controlled.

The carbon fibers may be spread and embedded in a polymeric matrix, such as for instance a thermoplastic or thermoset, to provide carbon-containing reinforcing elements which may be used in the process as described herein.

## Claims

1. A process for making a curved product comprising:
a) winding one or more reinforcing elements around a mandrel to provide a wound object,
wherein a matrix material is applied to part of the surface area of the one or more reinforcing elements prior to winding; and
wherein the matrix material is substantially homogeneously distributed along the surface of the wound object and, optionally, along the thickness of the wound object,
b) fixing at least some of the reinforcing elements to each other by the matrix material to provide a plurality of fixing points in the wound object, and
c) removing the wound object from the mandrel to provide at least one curved product.

2. The process according to claim 1 wherein the fixing points provided in b) are substantially homogeneously distributed along the surface of the wound object and, optionally, along the thickness of the wound object.

3. The process according to any one of the preceding claims wherein the matrix material is applied to one side of the one or more reinforcing elements.

4. The process according to any one of the preceding wherein the reinforcing elements comprise one or more tapes.

5. The process according to any one of the preceding claims wherein the matrix material is applied in molten form or solid form.

6. The process according to any one of the preceding claims wherein the distribution and/or composition of the matrix material varies along the length of the reinforcing elements.

7. The process according to any one of the preceding claims wherein the reinforcing elements comprise at least one of polyethylene, aramid and carbon.

8. The process according to any one of the preceding claims wherein the reinforcing elements comprise ultra-high-molecular-weight polyethylene.

9. The process according to any one of the preceding claims wherein the matrix material comprises a thermoplastic polymer.

10. The process according to any one of the preceding claims
wherein the curved product is a double curved product.

11. The process according to any one of the preceding claims
wherein the mandrel is an ellipsoid shaped mandrel.

12. The process according to any one of the preceding claims
wherein the curved product is a helmet pre-shape.

13. A process for making a consolidated curved product
comprising making a curved product by the method according to anyone of the preceding claims and moulding the curved product under heat and pressure.

14. A process for making a curved antiballistic article
comprising making a curved product or a consolidated curved product by the method according to any one of the preceding claims.

15. A curved product, a consolidated curved product or a
curved antiballistic article obtainable by the process according to any one of the preceding claims.
